# EUROPEAN PATENT APPLICATION

(11) **EP 3 404 824 A1**
(43) Date of publication of application: **21.11.2018**
(21) Application number: 18172046.7
(22) Date of filing: 14.05.2018
(51) Int. Cl.: H02P 6/16

(54) **MOTOR DRIVE DEVICE**

(30) Priority: 15.05.2017 JP 2017096372
(71) Applicant: Kabushiki Kaisha Toshiba, Tokyo 105-8001 (JP)
(72) Inventor: Aizawa, Toshimitsu, Tokyo, 105-8001 (JP)
(74) Representative: Hoffmann Eitle

(57) **Abstract**

A motor drive device of an embodiment includes: a power conversion circuit configured by connecting, in parallel, a plurality of legs respectively including series circuits of respective positive-side and negative-side switching elements, the power conversion circuit driving a motor; a control circuit generating and outputting an on/off signal to each of the switching elements constituting the power conversion circuit to control the motor; a rotational position detector detecting a rotational position of the motor; a rectifier full-wave rectifying input AC power supply voltage and outputting an obtained full-wave rectified voltage; and a voltage detector detecting the full-wave rectified voltage. The control circuit adjusts energization timing when energization of the motor is started via the switching elements and/or an energization time during which the energization is continued, determines the energization timing by first and second energization parameters and determines the energization time by first and second time parameters, and determines the first energization parameter and the first time parameter depending on rotation speed of the motor and determines the second energization parameter and the second time parameter depending on the full-wave rectified voltage.

## Description

### Field of the invention

Embodiments of the present invention relate to a motor drive device.

### Description of the related art

A brushless DC motor has been often used in recent years from viewpoints of energy saving and noise reduction. An inverter is used for driving a brushless DC motor, and in general household electrical appliances, etc., for a power supply of the inverter, a DC power supply in which a single-phase 100 V commercial AC power supply is rectified is used, for example. In a DC power supply circuit generating a DC power supply from an AC power supply, a smoothing capacitor for smoothing the DC power supply and a power factor correction reactor are used. These components are large in volume, which influences downsizing of a device and thereby hinders cost reduction.

Under such background, a DC power supply circuit that does not include a capacitor or a reactor has been examined; however, since a large ripple occurs in the DC voltage, there is a problem that motor control becomes unstable. To solve the problem, Japanese Patent Laid-Open No. 2003-61382 suggests a method for adjusting a command value of q-axis current on which a switching current output to an inverter is based, depending on a waveform synchronized with a phase of AC voltage.

However, in adjusting the control depending on the waveform synchronized with the phase of AC voltage, there is a probability of control breakdown when the AC power supply becomes unstable.

### Brief description of the drawings

FIG. 1 is a block diagram showing a configuration of a motor drive device in a first embodiment;
FIG. 2 is an operation timing diagram;
FIG. 3 is a diagram showing DC voltage detection timing and update timing of a lead angle and an energization angle;
FIG. 4 is a flowchart illustrating a main routine executed by a control microcomputer, regarding a part according to the gist of the embodiment;
FIG. 5 is a flowchart illustrating interrupt processing in association with occurrence of an edge of a rotational position signal;
FIG. 6 is a flowchart illustrating timer 1 interrupt processing;
FIG. 7 is a flowchart illustrating timer 2 interrupt processing;
FIG. 8 is a graph showing a lead angle A table;
FIG. 9 is a graph showing a lead angle B table;
FIG. 10 is a graph showing an energization angle A table;
FIG. 11 is a graph showing an energization angle B table;
FIG. 12 is a graph showing an energization angle B table in a second embodiment;
FIG. 13 is a timing diagram showing count values between zero-crossing points of AC power supply voltage, DC voltage, and AC voltage amplitude;
FIG. 14 is a graph showing a lead angle B table;
FIG. 15 is a graph showing an energization angle B table (Part 1); and
FIG. 16 is a graph showing an energization angle B table (Part 2).

### Detailed description of the embodiment

A motor drive device that can continuously generate a desired motor torque is provided by preventing breakdown of control.

A motor drive device of an embodiment includes:
a power conversion circuit configured by connecting, in parallel, a plurality of legs respectively including series circuits of respective positive-side and negative-side switching elements, the power conversion circuit driving a motor;
a control circuit generating and outputting an on/off signal to each of the switching elements constituting the power conversion circuit to control the motor;
a rotational position detector detecting a rotational position of the motor;
a rectifier full-wave rectifying input AC power supply voltage and outputting an obtained full-wave rectified voltage; and
a voltage detector detecting the full-wave rectified voltage,
wherein the control circuit adjusts energization timing when energization of the motor is started via the switching elements and/or an energization time during which the energization is continued,
determines the energization timing by first and second energization parameters and determines the energization time by first and second time parameters, and
determines the first energization parameter and the first time parameter depending on rotation speed of the motor and determines the second energization parameter and the second time parameter depending on the full-wave rectified voltage.

### (First Embodiment)

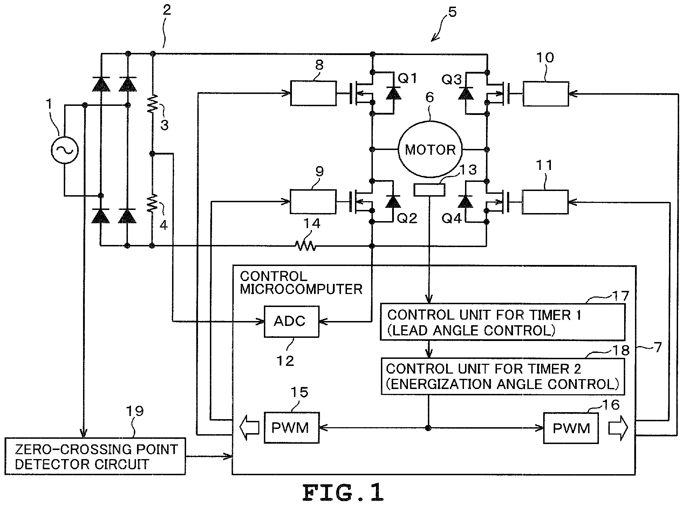

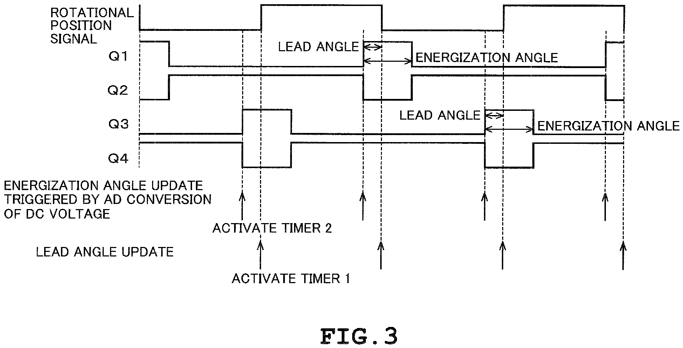

Hereinafter, a first embodiment will be described with reference to FIGs 1 to 11. In FIG. 1 showing a configuration of a motor drive device, both ends of a single-phase AC power supply 1 are connected to input terminals of a rectifier circuit 2 that includes a diode bridge. Between output terminals of the rectifier circuit 2, a series circuit of resistive elements 3, 4 and an inverter circuit 5 are connected in parallel. The inverter circuit 5 corresponding to a power conversion circuit includes four N-channel MOSFETs Q1 to Q4 connected in an H-bridge configuration. In addition, stator winding (not shown) of a single-phase brushless DC motor 6 is connected between a common connection point of a leg being a series circuit of the FET_Q1 and FET_Q2 and a common connection point of a leg being a series circuit of the FET_Q3 and FET_Q4. Note that, the FET_Q1 and FET_Q3 correspond to positive-side semiconductor switching elements and the FET_Q2 and FET_Q4 correspond to negative-side semiconductor switching elements.

Switching of the FET_Q1 to FET_Q4 is controlled by a control microcomputer 7. The control microcomputer 7 corresponding to a control circuit outputs a gate drive signal to a gate of each of the FET_Q1 to FET_Q4 via respective gate drive circuits 8 to 11. A common connection point of the resistive elements 3, 4 is connected to an input terminal of the control microcomputer 7. The control microcomputer 7 performs A/D conversion to divided voltage of the AC power supply 1 using an A/D converter 12 and reads the result.

Further, a Hall effect sensor 13 is disposed in the motor 6 and an output terminal of the Hall effect sensor 13 is connected to the input terminal of the control microcomputer 7. The Hall effect sensor 13 detects a magnetic field of a permanent magnet disposed on a rotator of the motor 6 and outputs a rotational position signal to the control microcomputer 7. The control microcomputer 7 switches an energization direction with respect to the stator winding of the motor 6 in accordance with the rotational position signal. The Hall effect sensor 13 corresponds to a rotational position detector.

In a power supply line connecting between the inverter circuit 5 and a ground being a negative-side terminal of the AC power supply 1, a resistive element 14 being a current detector is inserted. A terminal on the side of the inverter circuit 5 of the resistive element 14 is connected to the input terminal of the control microcomputer 7 and the control microcomputer 7 performs A/D conversion to terminal voltage of the resistive element 14 using the A/D converter 12 and reads the result. A zero-crossing point detector circuit 19 detects a zero-crossing point of a voltage waveform of the AC power supply 1 and outputs a detection signal to the control microcomputer 7.

The control microcomputer 7 includes a first PWM circuit 15 and a second PWM circuit 16, and the first PWM circuit 15 outputs a gate signal to FET_Q1 and FET_Q2 side, whereas the second PWM circuit 16 outputs a gate signal to FET_Q3 and FET_Q4 side. The control microcomputer 7 includes a control unit 17 for timer 1 and a control unit 18 for timer 2 that incorporate the timer 1 and the timer 2, respectively. The timers 1, 2 are programmable and correspond to first and second timers, respectively. The timer 1 is activated by an edge of the rotational position signal output by the Hall effect sensor 13 and is used for lead angle control in the motor 6. The timer 2 is activated when the counting of the timer 1 is completed and is used for energization time control in the FET_Q1 and FET_Q3.

As is well known, in the H-bridge inverter circuit 5, the stator winding of the motor 6 is energized, for example, in a positive direction by simultaneously turning on the FET_Q1 and FET_Q4, and is energized in an opposite direction by simultaneously turning on the FET_Q2 and FET_Q3.

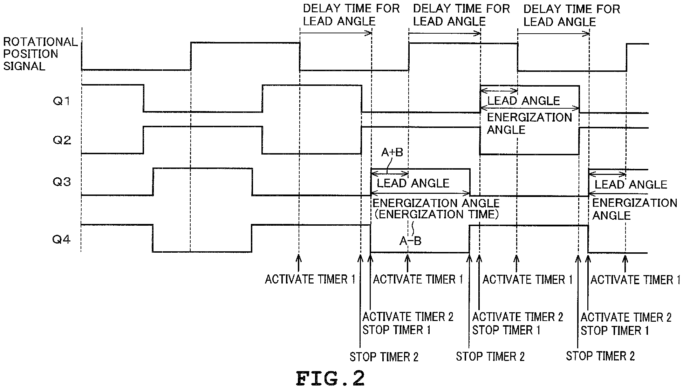

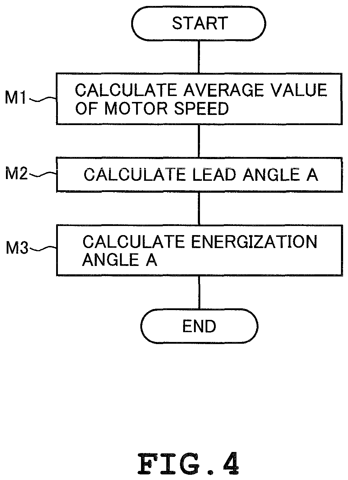

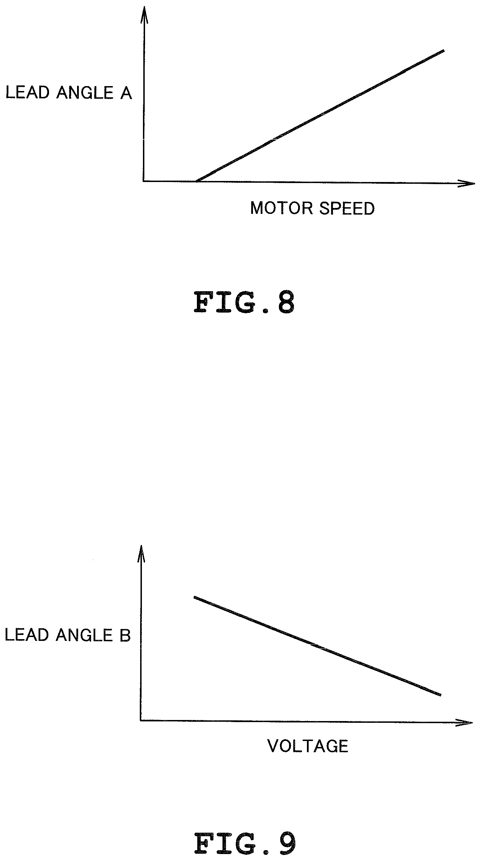

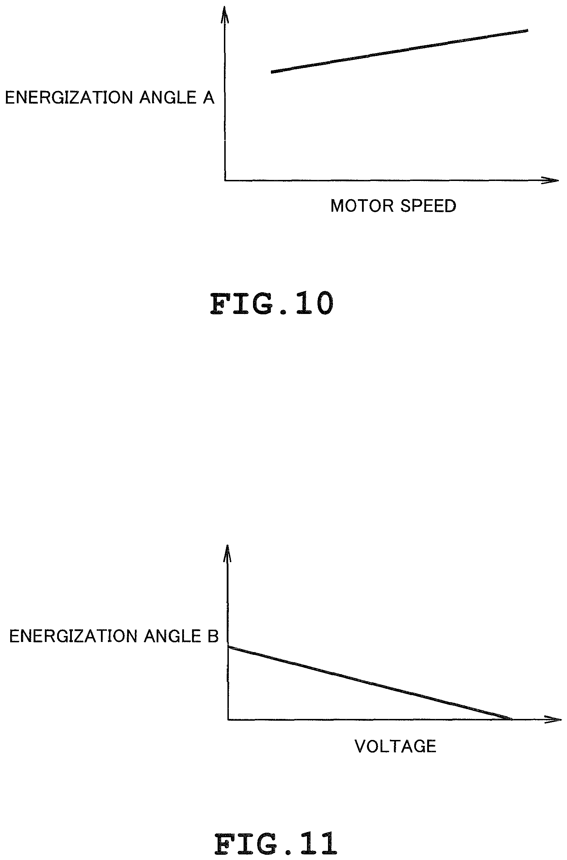

Next, operation of the present embodiment will be described with reference to FIGs 2 to 12. FIG. 4 shows processing details of a main routine executed by the control microcomputer 7, for example, every 1 ms, regarding only a part according to the gist of the present embodiment. The control microcomputer 7 calculates an average value of rotation speed of the motor 6 using a previous edge interval time of the rotational position signal (M1); thereafter calculates a lead angle A on the basis of, for example, a lead angle A table shown in FIG. 8, with the average value of the rotation speed as a parameter (M2); and as in the same way, calculates an energization angle A on the basis of, for example, an energization angle A table shown in FIG. 10, with the average value of the rotation speed as a parameter (M3). In the lead angle A and energization angle A tables as shown in FIGs 8, 10, each of the lead angle A and the energization angle A is set to be monotonically increased as the rotation speed increases.

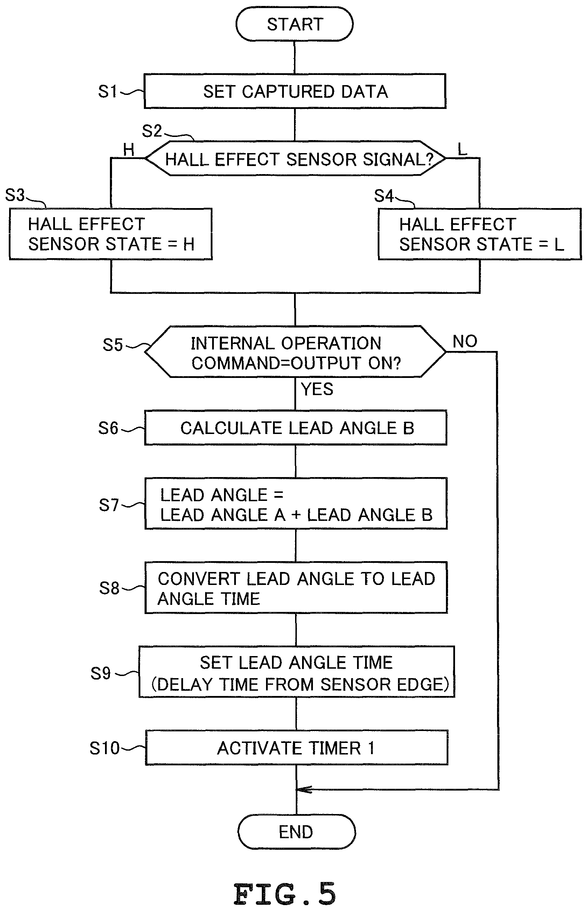

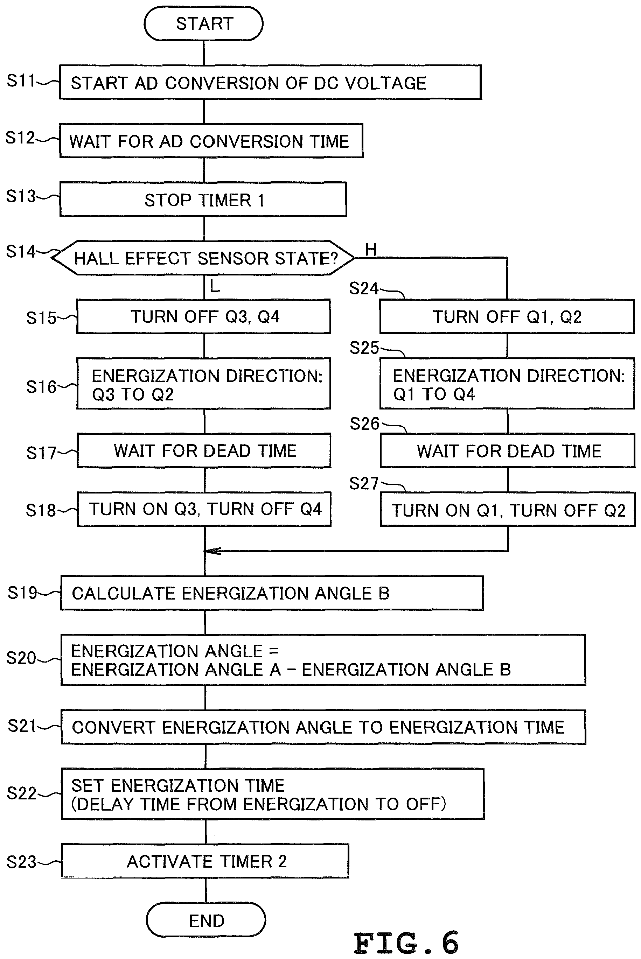

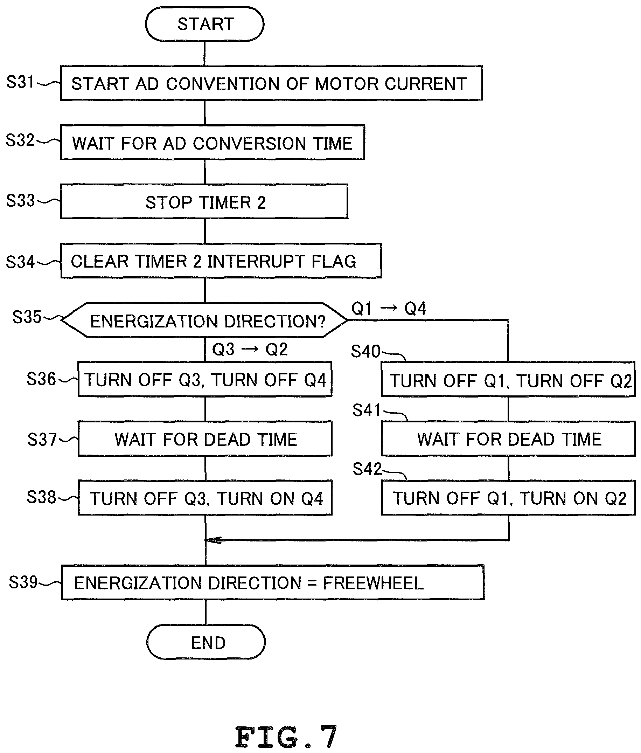

FIG. 5 is a flowchart illustrating interrupt processing in association with occurrence of the edge of the rotational position signal, FIG. 6 is a flowchart illustrating timer 1 interrupt processing, and FIG. 7 is a flowchart illustrating timer 2 interrupt processing.
(1) The timer 1 is activated by the edge (START in FIG. 5) of the rotational position signal output by the Hall effect sensor 13 (S10). At this time, a delay time from the signal edge is set (S9) to the timer 1 to perform the lead angle control in the motor 6 using the previous edge interval time of the rotational position signal (CAPTURED DATA in S1). Prior to that, the lead angle B is calculated on the basis of, for example, the lead angle B table shown in FIG. 9 from the DC voltage A/D-converted and read in the timer 1 interrupt processing in step S11 (S6). In the lead angle B table, the lead angle B is set to be monotonically decreased as the DC voltage increases.
   Moreover, a lead angle amount is determined by adding the lead angle B to the lead angle A determined in step M2 (S7) and the lead angle amount is converted to lead angle time (S8). The lead angle A and the lead angle B respectively correspond to first and second energization parameters. The delay time is set from the lead angle time (S9), that is,
   (delay time) = (edge interval time) - (lead angle time). This setting of the delay time corresponds to determining energization timing when the energization of the motor 6 is started. Note that, "INTERNAL OPERATION COMMAND=OUTPUT ON" in step S5 shown in FIG. 5 is a situation in which the inverter circuit 5 provides a command to drive the motor 6. In addition, the lead angle amount may be determined by (lead angle A) × (lead angle B).
(2) When set time is counted by the timer 1, a timer 1 interrupt occurs (START in FIG. 6). In processing in association with this interrupt, A/D conversion of DC voltage and full-wave rectified voltage detected by the series circuit of the resistive elements 3, 4 is started (S11) and waiting for time required for the A/D conversion (S12) . In addition, the timer 1 is stopped so as to prevent malfunction (S13). When the signal edge is "rising" (H in S14), the FET_Q1 is turned on (S27), whereas when the signal edge is "falling" (L in S14), the FET_Q3 is turned on (S18) to start energization of the motor 6. Thereafter, the timer 2 is activated (S23). At this time, the energization time determined in step S22 is set to the timer 2 (S22).
   Prior to that, the energization angle B is calculated on the basis of, for example, the energization angle B table shown in FIG. 11 from the DC voltage read in step S11 (S19). In the energization angle B table, the energization angle B is set to be monotonically decreased as the DC voltage increases. Moreover, an energization angle amount is determined by subtracting the energization angle B from the energization angle A determined in step M3 (S20) and the energization angle amount is converted to energization time (S21). The energization angle A and the energization angle B respectively correspond to first and second time parameters.
   Note that, at the time when the FET_Q1 is turned on, counting by the timer 2 in a control in processing (3) described below has been already completed, and in accordance with that, the FET_Q4 has been turned on; therefore, the energization is performed in a direction from the FET_Q1 to the FET_Q4 (S25). As in the same way, at the time when the FET_Q3 is turned on, the FET_Q2 has been already turned on; therefore, the energization is performed in a direction from the FET_Q3 to the FET_Q2 (S16).
(3) When set time is counted by the timer 2, a timer 2 interrupt occurs (START in FIG. 7). In processing in association with this interrupt, the positive-side FET_Q1 or FET_Q3 being turned on depending on the energization direction at present is turned off (S42, S38). Note that, A/D conversion of current detected by the resistive element 14 is started before the FET is turned off (S31). Thereafter, the timer 2 is stopped so as to prevent malfunction (S33) as with the timer 1.

In addition, when the FET_Q3 and FET_Q4 are turned off in step S36 and the FET_Q1 and FET_Q2 are turned off in step S40, the FET_Q4, FET_Q2 are respectively turned on in steps S38, S42 after dead-time waiting is performed in steps S37, S41. This makes reflux current flow through the inverter circuit 5, whereby to bring flowing current to the motor 6 into a "freewheeling" state (S39). Thereafter, when an edge of the rotational position signal in an opposite direction occurs, the processing is transitioned to the processing (1).

As described above, according to the present embodiment, the control microcomputer 7 adjusts the energization timing when the energization of the motor 6 is started via the FET_Q1 to FET_Q4 and an energization time during which the energization is continued, determines the energization timing by the lead angle A and the lead angle B, and determines the energization time by the energization angle A and the energization angle B. Further, the lead angle A and the energization angle A are determined depending on the rotation speed of the motor 6, and the lead angle B and the energization angle B are determined depending on the full-wave rectified voltage output via the rectifier circuit 2. This makes it possible to stably perform the lead angle control of the motor 6 even when the AC power supply 1 is unstable.

Moreover, since the control microcomputer 7 acquires the full-wave rectified voltage in the timer 1 interrupt processing that is timing when the energization of the motor 6 is started, the lead angle B and the energization angle B are reliably determined. In addition, since the control microcomputer 7 updates the energization timing synchronously with the signal edge that is timing when the rotational position signal output by the Hall effect sensor 13 changes, the lead angle control can be easily performed with the signal edge as a reference.

### (Second Embodiment)

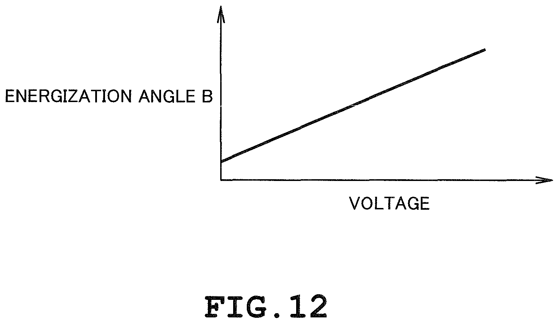

Hereinafter, identical components having the same reference numerals between the first embodiment and the other embodiments will not be described, and features different therebetween will be described. In an energization angle table B shown in FIG. 12, an energization angle B is set to be monotonically increased as DC voltage increases. The energization angle B may be determined using such a table. In this case, an energization angle amount is determined by (energization angle A) × (energization angle B) .

### (Third Embodiment)

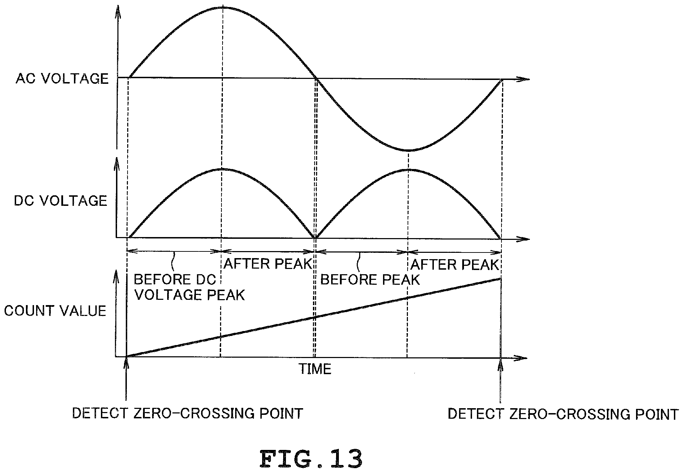

FIG. 13 shows schematic waveforms of AC power supply voltage and full-wave rectified voltage (DC voltage). Time measurement by the zero-crossing point detector circuit 19 enables detection of a frequency of AC voltage, before activating the motor 6. Time can be measured with, for example, a counting value by a dedicated timer or a periodic interrupt and if the frequency is shown, it is possible to determine, from the count value with the zero-crossing point as a reference, whether a DC voltage amplitude is before a peak value or after the peak value. These correspond to an elapsed time measurement unit that measures an elapsed time with the zero-crossing point as a reference, or a detection interval measurement unit that measures a detection interval of the zero-crossing point.

As in the same way, detecting the voltage before activation of the motor 6 enables detection of the amplitude of the AC voltage. Deviation occurs in a detected zero-crossing point position due to the amplitude of the AC voltage, depending on configuration of the zero-crossing point detector circuit 19. The amount of the deviation is therefore reflected to correction of a lead angle or an energization angle. For example, the amount of correction is changed between before and after a DC voltage peak.

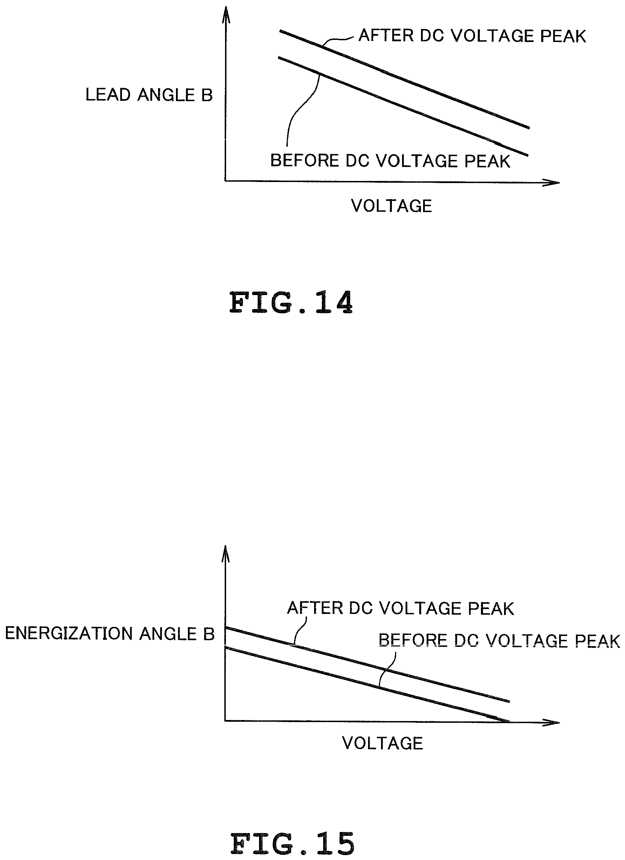

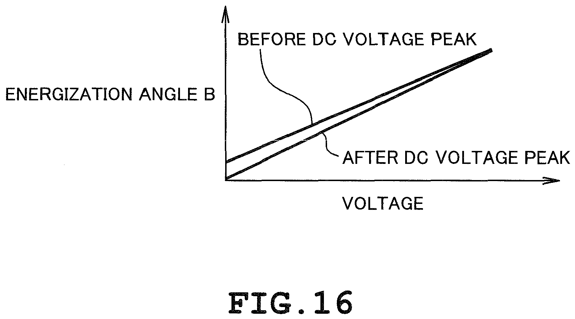

As shown in FIG. 14 and FIG. 15, the lead angle B and the energization angle B are monotonically decreased such that the lead angle B and the energization angle B are increased after the DC voltage peak compared to before the peak. Alternately, as shown in FIG. 16, the energization angle B is monotonically increased such that the energization angle B is decreased after the DC voltage peak compared to before the peak. Note that, the amount of correction may be changed between before and after the minimum DC voltage, instead of the peak.

As described above, according to the third embodiment, the control microcomputer 7 changes the lead angle B and the energization angle B between before and after the time when the voltage of the AC power supply 1 becomes maximum or minimum on the basis of an elapsed time from a zero-crossing point of the AC voltage amplitude and the detection interval of the zero-crossing point. This makes it possible to more accurately perform the lead angle control even when the deviation occurs in the detected zero-crossing point position due to the amplitude of the AC voltage.

### (Other Embodiments)

Only one of a lead angle and an energization angle may be adjusted.

A three-phase inverter circuit may be used.

A switching element is not limited to an MOSFET and may be an IGBT and a bipolar transistor, for example.

While certain embodiments have been described, these embodiments have been presented by way of example only and are not intended to limit the scope of the inventions. Indeed, the novel embodiments described herein may be embodied in a variety of other forms; furthermore, various omissions, substitutions, and changes in the form of the embodiments described herein may be made without departing from the spirit of the inventions. The accompanying claims and their equivalents are intended to cover such forms or modifications as would fall within the scope and spirit of the invention.

## Claims

1. A motor drive device that comprises a power conversion circuit configured by connecting, in parallel, a plurality of legs respectively including series circuits of respective positive-side and negative-side switching elements, the power conversion circuit driving a motor, the device comprising:
a control circuit generating and outputting an on/off signal to each of the switching elements constituting the power conversion circuit to control the motor;
a rotational position detector detecting a rotational position of the motor;
a rectifier full-wave rectifying input AC power supply voltage and outputting an obtained full-wave rectified voltage; and
a voltage detector detecting the full-wave rectified voltage,
wherein the control circuit adjusts energization timing when energization of the motor is started via the switching elements and/or an energization time during which the energization is continued,
determines the energization timing by first and second energization parameters and determines the energization time by first and second time parameters, and
determines the first energization parameter and the first time parameter depending on rotation speed of the motor and determines the second energization parameter and the second time parameter depending on the full-wave rectified voltage.

2. The motor drive device of claim 1, further comprising:
a zero-crossing point detector unit detecting a zero-crossing point of the AC power supply voltage;
an elapsed time measurement unit measuring an elapsed time with the zero-crossing point as a reference; and
a detection interval measurement unit measuring a detection interval of the zero-crossing point,
wherein the control circuit changes the second energization parameter and the second time parameter between before and after the time when the AC power supply voltage becomes maximum or minimum based on the elapsed time from the zero-crossing point and the detection interval of the zero-crossing point.

3. The motor drive device of claim 1 or 2,
wherein the control circuit acquires the full-wave rectified voltage at the energization timing.

4. The motor drive device of any one of claims 1 to 3,
wherein the control circuit updates the energization timing synchronously with timing when a position signal output by the rotational position detector changes.
